Europäisches Patentamt

European Patent Office ·

Office européen des brevets

(19)

(11) Veröffentlichungsnummer: **0 312 826**
**A2**

## (12) EUROPÄISCHE PATENTANMELDUNG

(21) Anmeldenummer: **88116381.0**

(22) Anmeldetag: **04.10.88** .

(51) Int. Cl.⁴: **G01N 21/76**

(30) Priorität: **19.10.87 CH 4090/87**

(43) Veröffentlichungstag der Anmeldung:
**26.04.89 Patentblatt 89/17**

(84) Benannte Vertragsstaaten:
**AT BE CH DE ES FR GB IT LI LU NL SE**

(71) Anmelder: **TECAN AG ANALYTISCHE
INSTRUMENTE
Landhaus Holgass
CH-8634 Hombrechtikon(CH)**

(72) Erfinder: **Döme, Peter
Aehrenweg 32
CH-8634 Hombrechtikon(CH)**
Erfinder: **Wagner, Heinz
Kleinalbis 33
CH-8045 Zürich(CH)**
Erfinder: **Meier, Alfred
Stoffelstrasse 10
CH-8052 Zürich(CH)**

(74) Vertreter: **Lusuardi, Werther G.
Dr. Lusuardi AG Stockerstrasse 8
CH-8002 Zürich(CH)**

(54) **Vorrichtung zur Mehrfach-Analyse von Gasen.**

(57) Bei dieser Vorrichtung zur Mehrfach-Analyse von Gasen, welche mit anderen Gasen unter Aussendung von Licht reagieren können, mit mindestens zwei Reaktionskammern (1a,1b) und einem Photodetektor (3), wird das aus den Gasreaktionen herrührende Licht von den einzelnen Reaktionskammern (1a,1b) in rascher, konsekutiver Folge mittels eines beweglich angeordneten, optischen Abbildungssystems (2) zum Photodetektor (3) gelenkt und ausgewertet.

Fig. 1

EP 0 312 826 A2

## Vorrichtung zur Mehrfach-Analyse von Gasen

Die Erfindung bezieht sich auf eine Vorrichtung zur Mehrfach-Analyse von Gasen, welche mit anderen Gasen unter Aussendung von Licht reagieren können, mit mindestens zwei Reaktionskammern und einem Photodetektor, sowie auf die Verwendung dieser Vorrichtung zur Chemilumineszenz-Analyse, insbesondere zur Analyse von NO/NO$_x$.

Bei einer ganzen Anzahl von gasanalytischen Bestimmungen besteht das Bedürfnis mehrere Reaktionen simultan, oder mindestens quasi-simultan zu verfolgen und mit ein und demselben Detektor zu messen.

Die bisher bekannten Vorrichtung für solche Mehrfach-Analysen von Gasen arbeiten alle mit einer Fiberoptik. Aus der GB-A 2'016'679 ist beispielsweise ein Chemilumineszenz-Gasanalysator mit zwei Reaktionskammern bekannt, bei dem das aus den beiden Reaktionskammern emittierte Licht durch einen mechanischen Unterbrecher ("chopper") intermittierend je einem Schenkel eines Y-förmigen Lichtleiters zugeführt wird, der das Licht zu einem einzigen, zentralen Photodetektor leitet. Um das für solche Analysen notwendige Qualitätsniveau aufrechtzuerhalten sind Lichtleiter mit einem grossen Querschnitt erforderlich, welche ausserordentlich teuer sind.

Hier will die Erfindung Abhilfe schaffen. Aufgabe der Erfindung ist die Beobachtung, bzw. Messung mehrerer gleichzeitig in verschiedenen Reaktionskammern ablaufender Gasreaktionen mit ein und demselben Photodetektor ohne Verwendung von zusätzlichen faseroptischen Lichtleitern.

Die Erfindung löst die gestellte Aufgabe mit einer Vorrichtung, welche die Merkmale des Anspruchs 1 aufweist, sowie mit einer Verwendung dieser Vorrichtung, welche die Merkmale des Anspruchs 6 aufweist.

Die durch die Erfindung erreichten Vorteile sind im wesentlichen darin zu sehen, dass dank der erfindungsgemässen Vorrichtung die Reaktionskammern sowohl dimensionell, als auch formmässig mit grosser Freiheit gestaltet werden können, bei gleichzeitiger optimaler Anpassung des Reaktionsvolumens an die aktive Photodetektorfläche, so dass kleinflächige, billige Photodetektoren verwendet werden können und auf teure Lichtleiter verzichtet werden kann.

Weitere Vorteile sind folgende:
- Das für die erfindungsgemässe Vorrichtung verwendete optische Abbildungssystem besitzt nur eine geringe Masse, welche auf kleinsten Wegstrecken bewegt werden muss, was ein rasches Umschalten von einer Reaktionskammer zur anderen ermöglicht.

- Die Reihenfolge der zu erfassenden Reaktionen mehrerer Reaktionskammern oder auch die Messzeit sind völlig frei wählbar, so dass eine grösstmögliche Flexibilität der Messmodi resultiert.
- Die Zwischenschaltung einer "Blindphase", bei welcher der Lichteinfall für die Dunkelstrombestimmung des Detektors unterdrückt werden soll ist leicht realisierbar, ohne dass dazu ein zusätzlicher Lichtunterbrecher ("chopper") nötig ist.
- Das rasch bewegliche optische Abbildungssystem ermöglicht dank periodischer Ablenkung des Reaktionslichtes ein Wechselsignal am Photodetektor zu erzeugen; durch Synchrongleichrichtung des so gewonnenen Lichtempfängerstroms wird ein hohes Signal zu Rauschverhältnis erreicht und der Nullpunktsdrift unterdrückt.
- Zur Untersuchung von periodisch anfallenden Probegasen (z.B. bei Verbrennungsmotoren) kann ein synchronisierter Ablenkungsmechanismus mittels Phasenschieben zur Analyse des zeitlichen Reaktionsprofiles herangezogen werden.
- Die gleichzeitige Bestimmung von mehreren Stickstoffverbindungen wird dadurch erleichtert, dass man quasi-simultan, z.B, drei Reaktionen messen kann; so ist durch die Verwendung von zwei auf verschiedenen Temperaturen arbeitenden Konvertern die Möglichkeit der gleichzeitigen Erfassung von NO, NO$_2$, und NH$_3$ gegeben.
- Bei hintereinandergeschalteten Reaktionskammern können Chemilumineszenzabläufe mit unterschiedlichen Reaktionsgeschwindigkeiten gemessen werden. Dies führt zu direkter Bestimmung von parasitären Reaktionen von Störkomponenten und erlaubt die Korrektur des Messignales auf die einzig interessierende Hauptkomponente des Messgases.

Die bevorzugt Verwendung der erfindungsgemässen Vorrichtung ist die Chemilumineszenz-Analyse, insbesondere die Analyse von NO/NO$_x$. Bei der chemilumineszenz-Analyse kann die in der Reaktionsgleichung: NO + O$_3$ → NO$_2$ + O$_2$ + E freiwerdende Lichtenergie E zur Messung der NO-Konzentration verwendet werden, da diese bei einem Ueberschuss an O$_3$ proportional zur NO-Konzentration im Messgas ist. Diese Lichtemission kann mit sensiblen Lichtdetektoren, z.B. Photovervielfachern (PMT), erfasst und mittels einer Messelektronik in ein Messignal verwandelt werden. Das zur Reaktion nötige Ozon wird mit einem Ozon-Generator erzeugt. Die Chemilumineszenztechnik wird als die zuverlässigste kontinuierliche Messmethode für Stickoxide angesehen. Zur Messung des NO$_2$-Gehaltes wird das zu analysierende Gesgemisch, welches in der Regel sowohl NO als auch NO$_2$ enthält (NO$_x$), vorerst durch einen sogenann-

ten Konverter geleitet, welcher $NO_2$ zu NO reduziert.

Ein Ausführungsbeispiel der Erfindung, welches zugleich das Funktionsprinzip erläutert, ist in der Zeichnung dargestellt und wird im folgenden näher beschrieben.

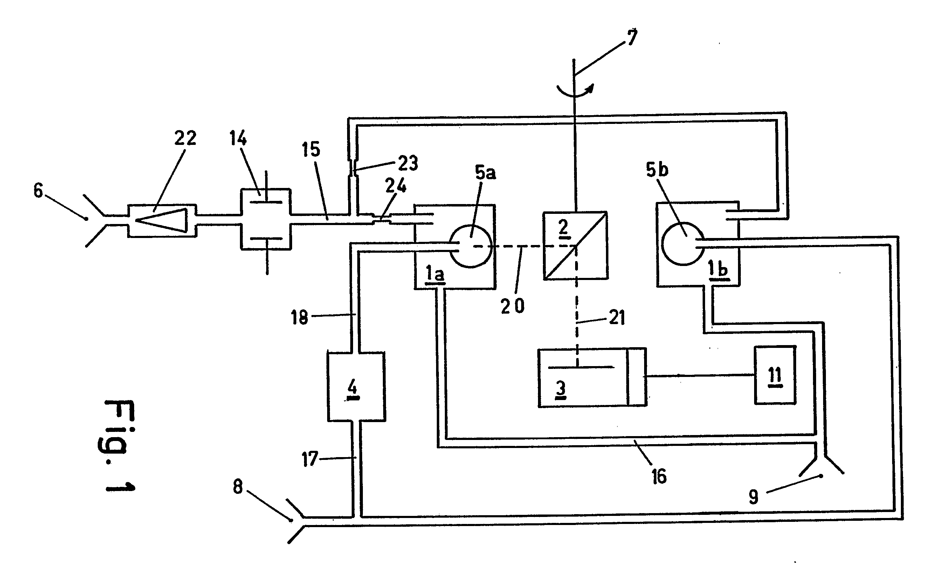

Figur 1 stellt das Prinzipschema einer erfindungsgemässen Vorrichtung mit zwei Reaktionskammern dar.

Das in Figur 1 gezeigte Ausführungsbeispiel dient zur Bestimmung von $NO/NO_x$. Es ermöglicht die gleichzeitige Bestimmung der Konzentration von NO und $NO_2$ im Probegas, welches durch den Probegas-Einlass 8 in den Analysator eingeführt wird. Dies erfolgt durch quasi-simultane Messung der Chemilumineszenz in den beiden Reaktionskammern 1a, 1b. In der Reaktionkammer 1b reagiert der No-Anteil des zu messenden Gases, in der Reaktionskammer 1a das zum $NO_x$, d.h. Gesamtstickoxidanteil des Probegases proportionale NO, bei der z.B. also auch die $NO_2$-Konzentration mitberücksichtigt wird; um diese zu erfassen wird das Probegas für die Reaktionskammer 1a über die Probegas-Leitung 17 in einen Konverter 4 geleitet, welcher $NO_2$ zu NO reduziert und dieses über die Leitung 18 zur Reaktionskammer 1a führt.

Ueber den Lufteinlass 6 mit Durchflussmesser 22 wird dem Ozongenerator 14 in kontrollierbarer Weise Luft zugeführt und das dabei entstehende Ozongas durch die Gasleitung 15 mit den Kapillaren 23 und 24 den beiden Reaktionskammern 1a, 1b zugeführt.

Die in den Reaktionskammern 1a und 1b stattfindenden Gasreaktionen 5a, 5b führen zu entsprechenden Chemilumineszenzen. In der Figur 1 ist der Weg des aus der Reaktionskammer 1a austretenden Lichtes 20 eingezeichnet, welches vom Prisma 2 rechtwinklig (Lichtstrahl 21) zum Photovervielfacher 3 abgelenkt wird. Durch einen in der Figur nicht dargestellten Umlenkmechanismus wird das Prisma 2 in schneller Folge um die Achse 7 hin und her rotiert, so dass abwechslungsweise die Lichtemissionen aus den Reaktionskammern 1a und 1b über das Prisma 2 zum Photovervielfacher 3 gespiegelt werden.

Das Gehäuse des Photovervielfachers (nicht dargestellt) kann mittels Peltier-Elementen gekühlt und thermostatisiert werden, mit dem Ziel, das Grundrauschen ("noise") und Messignalschwankungen, d.h. Verschiebungen in der Verstärkung ("spandrift") zu reduzieren. Zwischen den Reaktionskammern 1a, 1b und dem Photovervielfacher 3 kann ein optisches Infrarot-Filter (nicht dargestellt) montiert werden.

Die vom Photovervielfacher 3 aufgenommene Lichtemission kann über den Signalanalysator 11 angezeigt werden.

Die Reaktionsgase werden über die Gasleitung 16 von den beiden Reaktionskammern 1a, 1b zum Auslass 9 geleitet.

Je nach Bedarf können zusätzlich (nicht dargestellte) Druckregulierventile, Dreiweg-Magnetventile, Durchflussmeter, Vakuumpumpen, Aktivkohlenfilter und Kapillaren in den Kreislauf des Analysators eingebaut werden.

## Ansprüche

1. Vorrichtung zur Mehrfach-Analyse von Gasen, welche mit anderen Gasen unter Aussendung von Licht reagieren können, mit mindestens zwei Reaktionskammern (1a, 1b) und einem Photodetektor (3), gekennzeichnet durch ein beweglich angeordnetes, optisches Abbildungssystem (2), welches das aus den Gasreaktionen herrührende Licht von den einzelnen Reaktionskammern (1a,1b) in rascher, konsekutiver Folge zum Photodetektor (3) lenken kann.

2. Vorrichtung nach Anspruch 1, dadurch gekennzeichnet, dass das optische Abbildungssystem (2) ein Spiegel oder ein Prisma ist.

3. Vorrichtung nach Anspruch 1 oder 2, dadurch gekennzeichnet, dass das optische Abbildungssystem (2) um eine Achse (7) rotierbar angeordnet ist.

4. Vorrichtung nach einem der Ansprüche 1 - 3, dadurch gekennzeichnet, dass bei der einen Reaktionskammer (1a) ein Konverter (4) zur Reduktion von $NO_2$ zur NO vorgeschaltet ist.

5. Vorrichtung nach einem der Ansprüche 1 - 4, dadurch gekennzeichnet, dass das optische Abbildungssystem (2) zwischen den beiden Reaktionskammern (1a,1b) angeordnet ist, vorzugsweise auf der Verbindunglinie zwischen den beiden Gasreaktions-Zentren (5a,5b).

6. Verwendung der Vorrichtung nach einem der Ansprüche 1 - 5 zur Chemilumineszenz-Analyse, insbesondere zur Analyse von $NO/NO_x$.

7. Verwendung nach Anspruch 6 zur simultanen Messung von NO und $NO_x$.

Fig. 1